# EUROPEAN PATENT SPECIFICATION

(11) **EP 0 612 176 B1**
(45) Date of publication and mention of the grant of the patent: **13.06.2001**
(21) Application number: 93919331.4
(22) Date of filing: 24.08.1993
(51) Int. Cl.: H04M 1/17

(54) **ANTISEPTIC TELEPHONE SET**
ANTISEPTISCHES TELEFONGERÄT
APPAREIL DE TELEPHONE ANTISEPTIQUE

(30) Priority: 29.08.1992 ES 9201786; 27.04.1993 ES 9300891
(43) Date of publication of application: 24.08.1994
(73) Proprietor: FERNANDEZ-SACRISTAN GARCIA, Eduardo, E-28004 Madrid (ES)
(72) Inventor: FERNANDEZ-SACRISTAN GARCIA, Eduardo, E-28004 Madrid (ES)
(74) Representative: Del Santo Abril, Natividad
(86) International application number: ES9300070
(87) International publication number: WO9406235

(56) References cited:
- DE-A- 2 649 297
- GB-A- 2 221 818
- GB-A- 2 246 050

## Description

The invention refers to a telephone set similar to the common one used currently and commercialised for public and private use, with the additional characteristic that it allows the cleaning and disinfection of both the hearing and the speaking areas of the telephone receiver, before the user comes into contact with it.

Some telephone sets with cleaning device are already known. Thus, the German patent DE 2 649 297 describes a telephone having a cleaning cloth which is impregnated with antiseptic liquid. This cleaning cloth is inserted as a plug in a sort of hermetic foil which closes it along three of its sides, allowing a high stage of impregnation, and such cleaning cloth rolling up along its length so that the cleaning face of the cloth remains in contact with the hermetic foil of the previous turn.

The British patent GB 2 246 050 describes a telephone set wherein the cleaning device consists of a dish-shaped brush which is saturated of antiseptic liquid and placed on a revolving lodge, so that it cleans the speaking area of the receiver by means of a rubbing of such receiver with the impregnated brush in a rotation over its own revolution axle. Same this device as the one described in the German patent DE 2 649 297 suffer from a relative short life of impregnations of the cleaning cloth, since the quantity of antiseptic liquid that can be stored is limited somehow.

There are other means of cleaning which do not resort to an antiseptic liquid. Thus, the British patent GB 2 221 818 uses an emitter of ultraviolet radiation to sterilize the bacterial flora which could have accumulated in the receiver.

Accordingly, an object of the present invention is to provide an antiseptic telephone set, public or private, which, in addition to its main purpose of communication, also allows the effective cleaning and disinfection of the speaking and hearing areas of the receiver thereof in an easy and simple manner to prevent the contamination by diseases. The chosen system consists of the use of a disposable cartridge which comprises a cleaning cloth and a big-volume reservoir of disinfectant liquid, being the cleaning cloth impregnated with disinfectant liquid while acting on the receiver.

In order to buttress the foregoing effect and to make sure the liquid contained in the reservoir does not evaporate, there is a sliding cover planned for sealing off as hermetic as possible the housing of the telephone as a whole, since the sealing off of the reservoir of liquid itself is certainly incomplete for it presents compulsorily some slots through which the cloth is to pass.

One aspect of the invention provides a cleaning cloth comprising side perforations for the cloth to be dragged, and this drag is as well to be made independent from the recovery reel.

Other preferred forms of the invention are further defined in dependent claims 2-19.

The invention will be better understood and further objects, characteristics, details and advantages thereof will appear more clearly in the explanatory description which will follow, made with reference to the attached diagrammatic drawings given by way of example only illustrating an embodiment of the invention and in which :

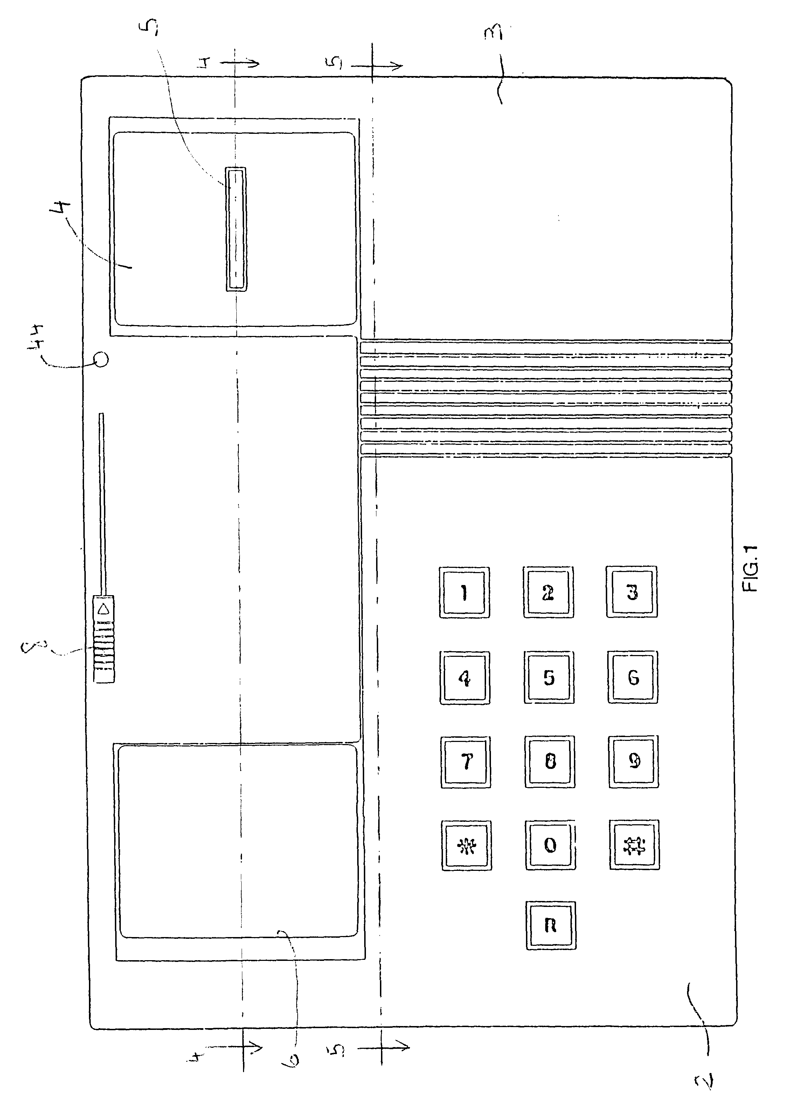

Figure 1 is a top plan view of the base of the telephone set ;

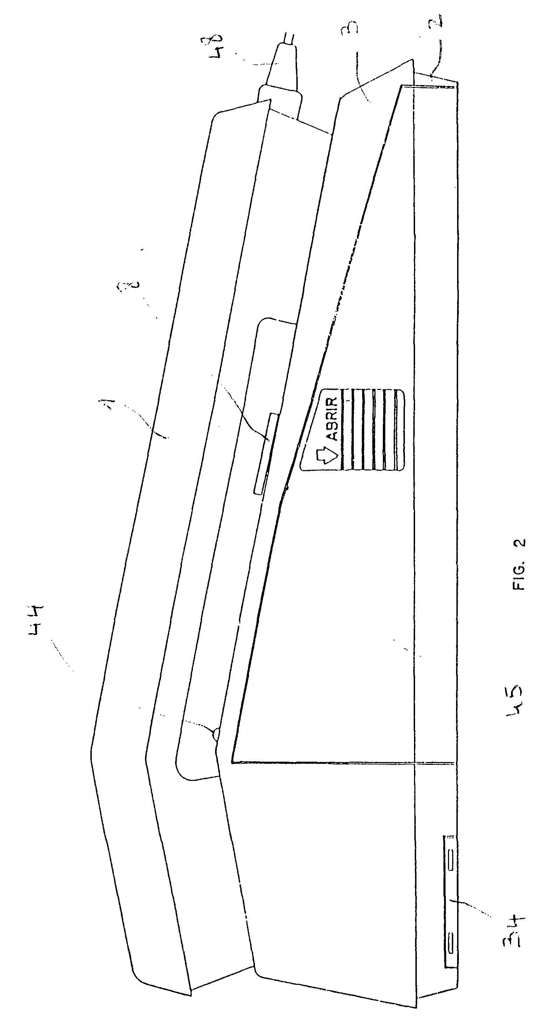

Figure 2 is a side elevational view of the telephone set showing the receiver and the base thereof ;

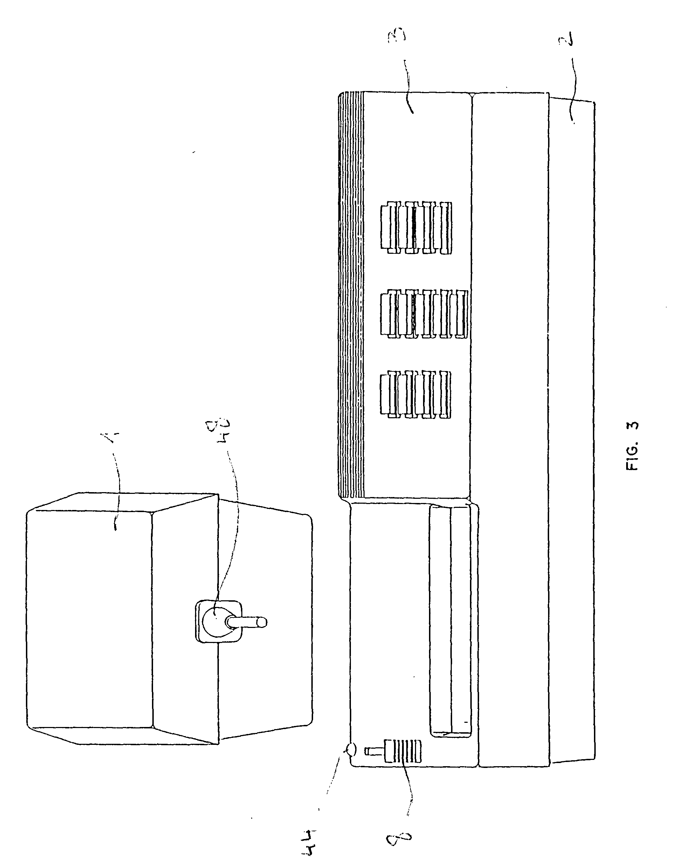

Figure 3 is an end view of the telephone set showing the receiver slightly raised above the base ;

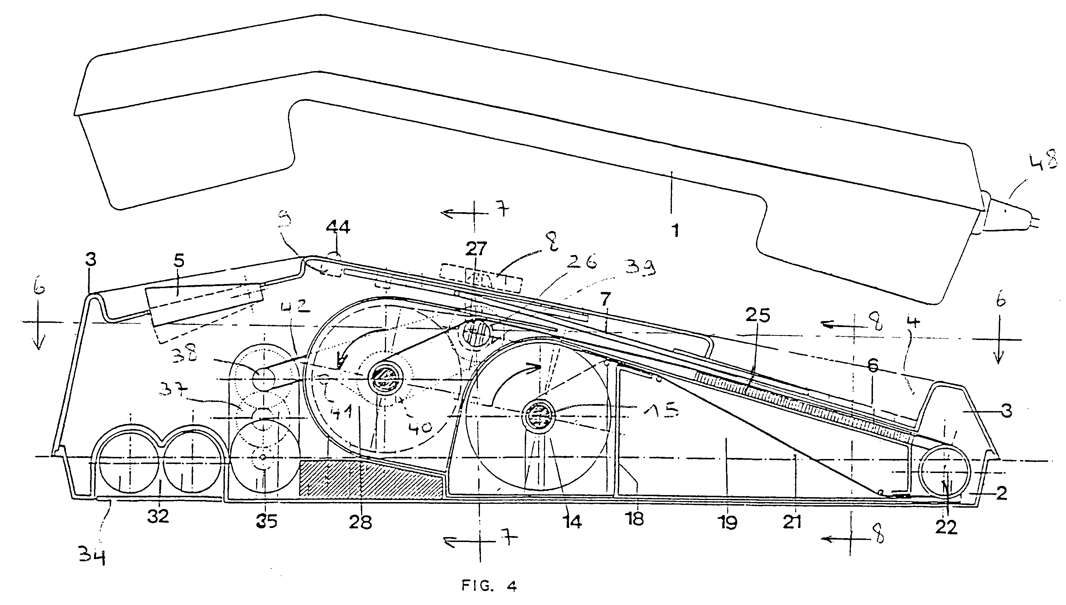

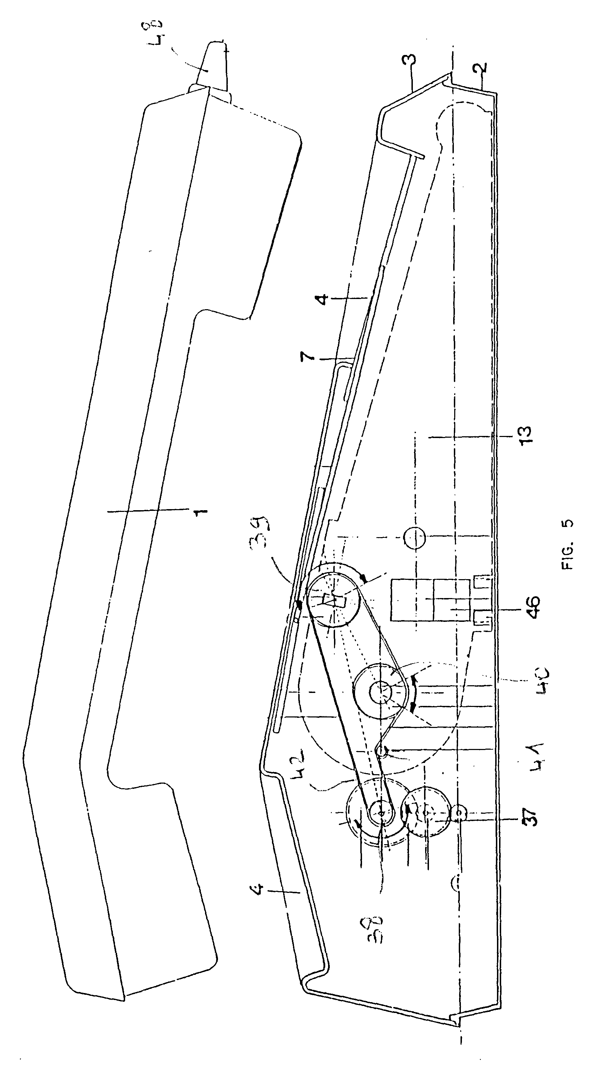

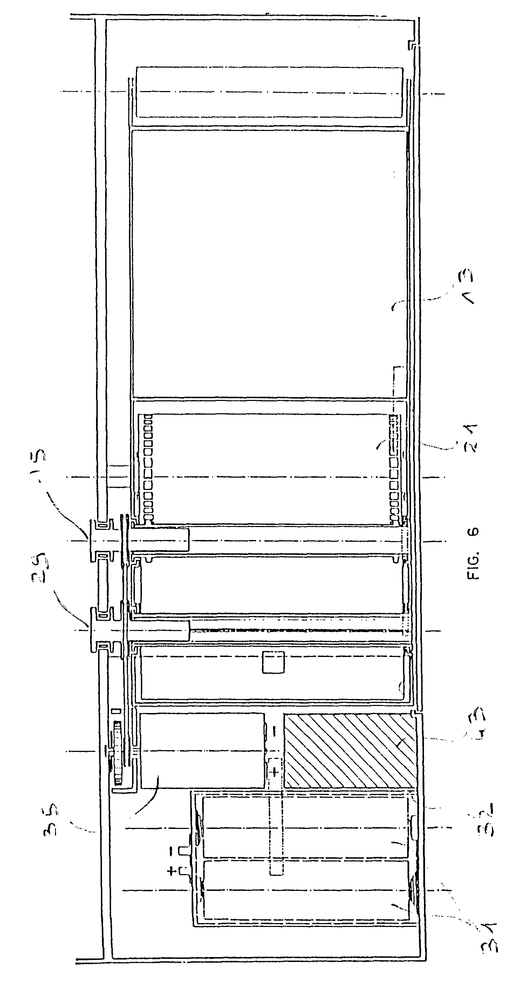

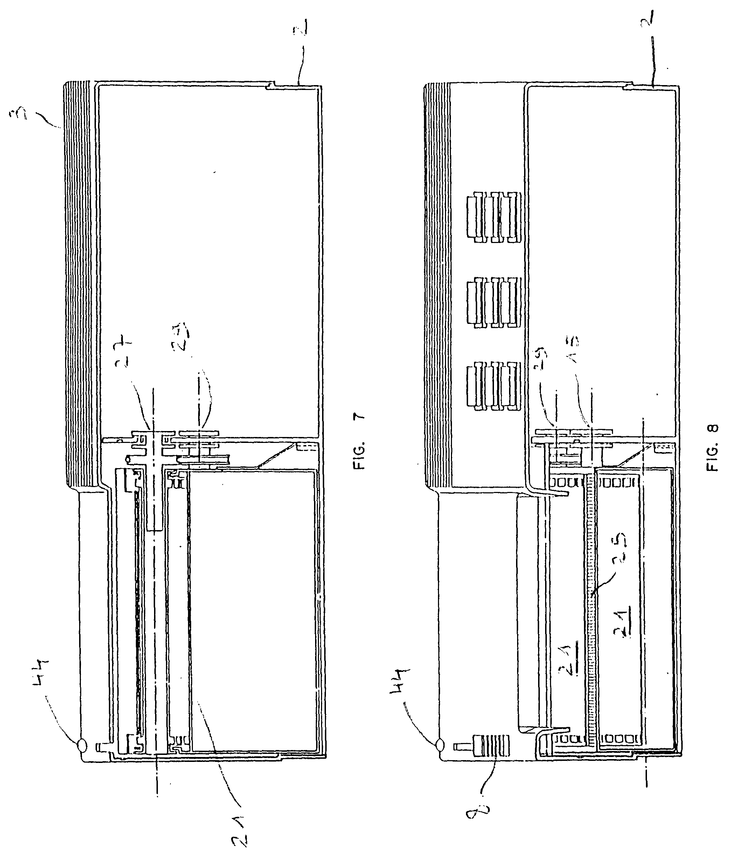

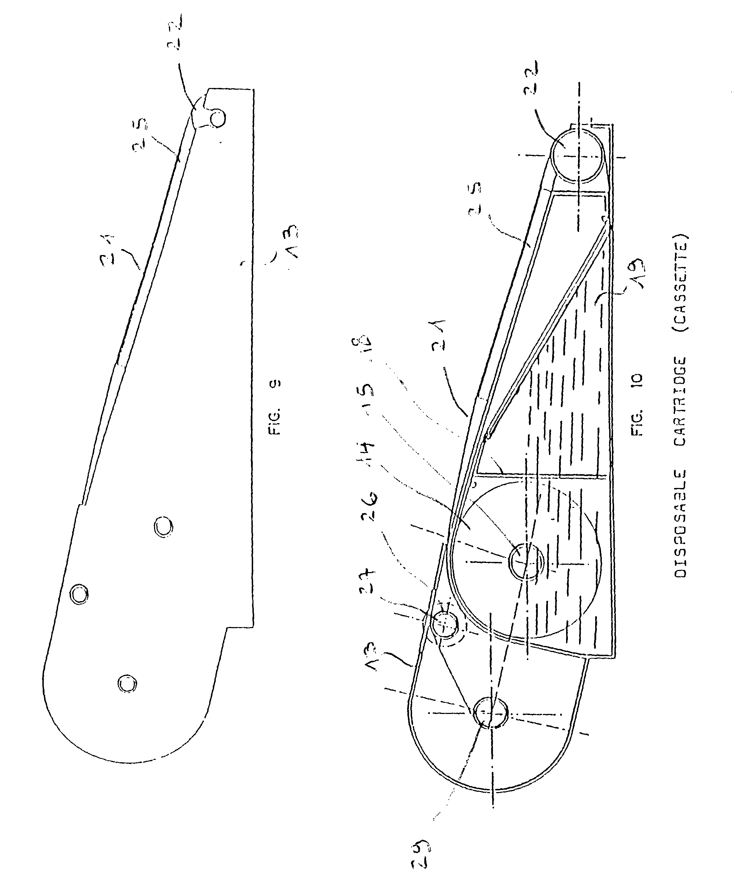

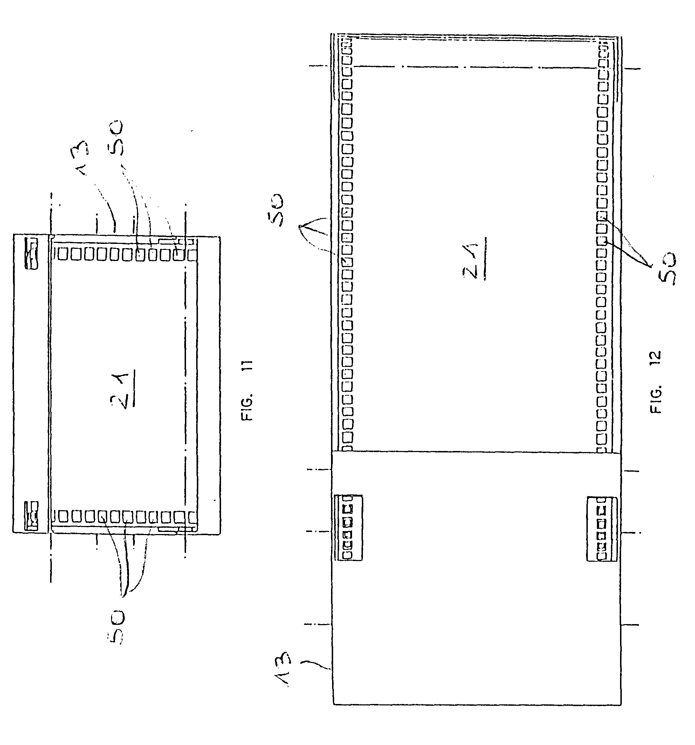

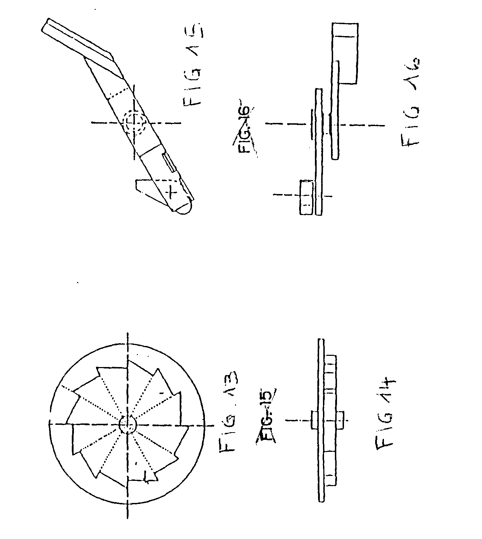

Figure 4 shows a sectional view of the base taken substantially along line 4-4 of Fig.1, and also shows the receiver raised above the base;

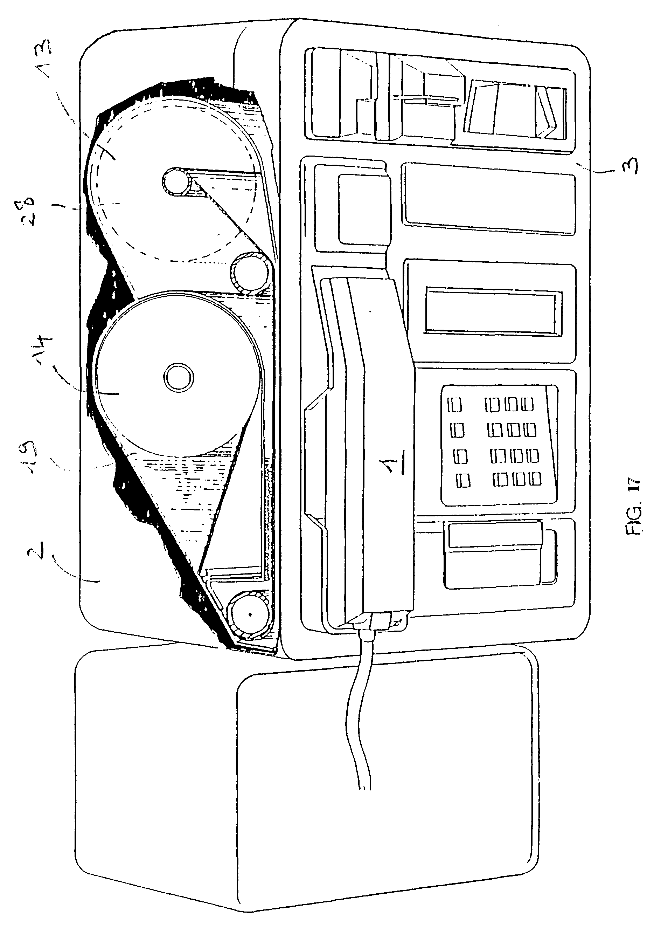

Figure 5 shows a section view of the base taken substantially along line 5-5 of Fig.1, and also shows the receiver raised above the base ;
Figure 6 is a sectional view taken substantially along line 6-6 of Fig. 4 ;
Figure 7 is a section view taken substantially along line 7-7 of Fig. 4 ;
Figure 8 is a sectional view taken substantially along line 8-8 of Fig.4 ;
Figure 9 is a side view of a disposable cassette or cartridge ;
Figure 10 is a cross-sectional view taken through the cassette or cartridge of Fig. 9 ;
Figure 11 is a right end view of the cassette or cartridge shown in Fig. 9 ;
Figure 12 is a top plan view of the cassette or cartridge shown in Fig. 9 ;
Figures 13 and 14 show a unidirectional gear for a manual system ;
Figures 15 and 16 show a lever for actuating the unidirectional gear of Figs. 13 and 14 ;
Figure 17 shows a fragmented perspective view of another type of telephone set ;

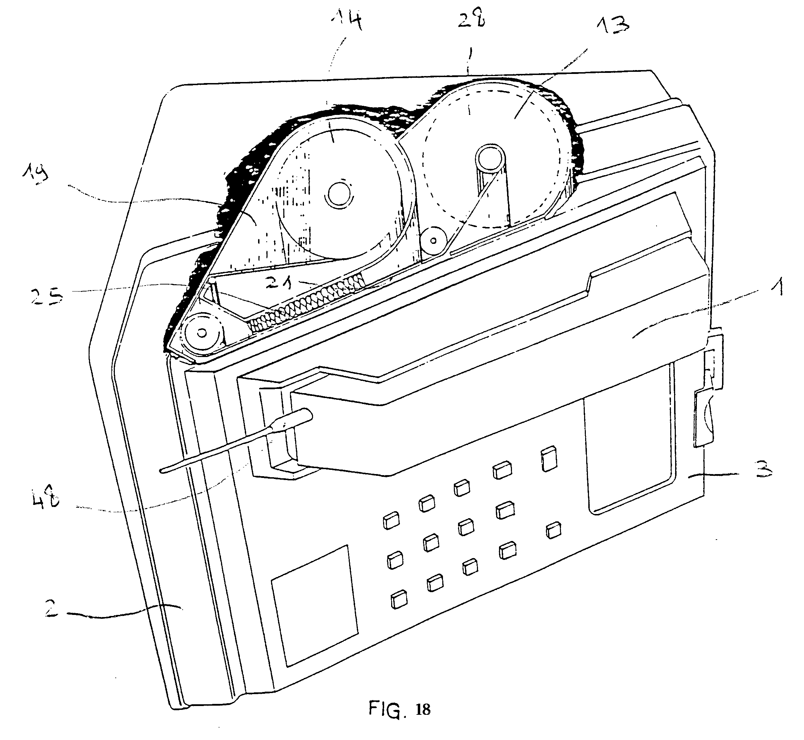

Figure 18 shows a fragmented perspective view of still another type of telephone set ;

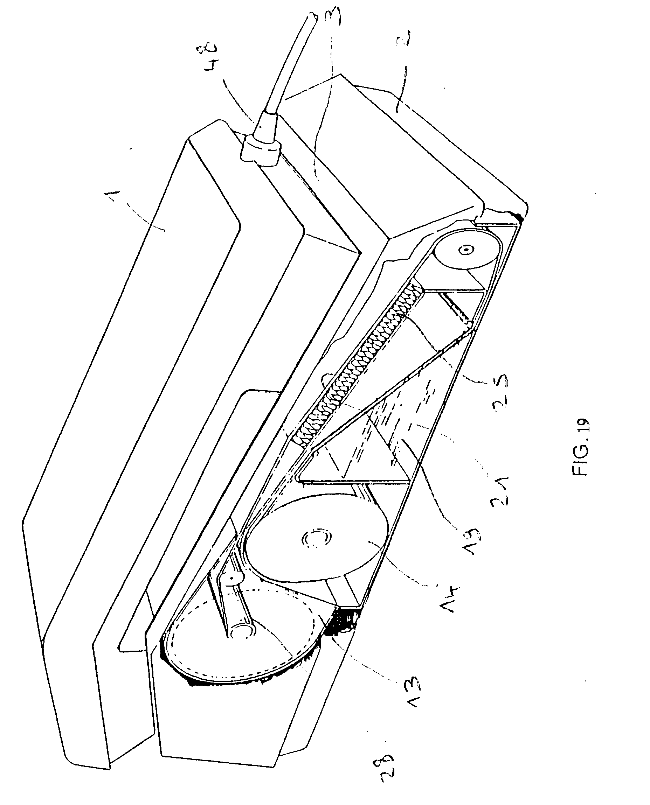

Figure 19 shows a fragmented perspective view of yet another type of telephone set.

Referring to the drawings, the telephone set according to the invention is made out of the following parts :
1. Receiver
2. Base
3. Cover
4. Receiver housing
5. Line cutoff
6. Cleaning window
7. Sliding cover
8. Cover sliding pin
9. Stop
10. Recovery spring
11. Cover guide
12. Cover guide pins
13. Cartridge case
14. Emission reel
15. Reel shaft, emission reel
16. Shaft friction retention
17. Wetting solution (liquid)
18. Reservoir division
19. Antiseptic liquid
20. Guide shaft
21. Cleaning baize
22. Guide reel
23. Reel fixing pin
24. Reel fixing pins
25. Pressure foam
26. Traction reel
27. Traction shaft
28. Recovery reel
29. Recovery reel shaft
30. Sliding friction shaft
31. Batteries 1,5 v 14 m/m
32. Battery housing
33. Electric connections
34. Battery housing cover
35. Electric motor c.c.3 v.18 m/m
36. Reducing mechanism case
37. Reducing gear
38. Transmission pulley
39. Traction pulley
40. Sliding pulley
41. Tensionner
42. Transmission rubber
43. Motor electric control system
44. End of Baize indicator
45. Disposable cartridge housing cover
46. Spring cartridge ejection
47. Ejection spring fixing
48. Receiver cable.

The telephone set according to the invention is arranged as follows.

Outside a cleaning window 6, where usually the receiver 1 is placed, in the speaking housing area to which a sliding cover 7 has been incorporated to close the window 6 and whose purpose is to protect from possible external pollution the cleaning baize 21 and the complete system in general and to avoid evaporation of antiseptic liquid soaked in the cleaning baize 21, except for the short time when it opens to perform the cleaning of receiver 1 before user starts a new communication, at this time when the cover 7 slides, the cleaning mechanism inhoused inside the case, will start.

It also has a basculating cover 45 at one side of main case 2 of the telephone set to allow to close the housing where disposable cartridge 13 and baize 21 are and to allow the extraction of disposable cartridge 13 (main component of cleaning system), and another sliding cover 34 under main case to close the battery housing and to allow the exchange of batteries 31, an indicator 44 of end of baize 21 or an obstruction in the baize system, and an external lever for manual use in case of manual action of system.

And inside when the system is manual, the following mechanical components :

A mechanical system by gear of traction unidirectional.

A reducing gear system acting directly over traction shaft 27.

In the event of electrical use :
- 2 Standard batteries 31 of 1,5 volts
- An electrical motor 35 of c.c. of 3 volts
- A reducing gear system 37
- A clutch and transmission system by pulleys 38, 39, 40
- A stop contact 9
- An overload control system of obstruction detector of baize end, which will cut off electrical supply to motor switching on the indicator.

Any of the systems mentioned, manual or electrical (by batteries or electrical supply from the own telephone) is connected to a compact disposable cartridge or cassette 13 (main component of system) inhouse also in the telephone case, is made out of three independent compartments, one for the emission reel 14 of baize soaked in liquid when it passes through reservoir 18, another one for the recovery of the used baize 21 on reel 28 and a third one 18 for the antiseptic liquid in which the baize 21 is soaked when it passes through.

It also has a guide reel 22 and pressure foam 25 placed outside of cartridge 13 which exactly matches the cleaning window 6 when said cartridge is placed in place and over which the baize 21 passes when it slides from one reel 14 to the other 28. The foam 25 has the duty of counterbalancing the weight of receiver areas when in contact with baize 21 for cleaning and to better adapt to the shape of hearing and speaking areas of receiver 1.

To resume, we can say that the cleaning will be performed on the speaking or hearing area of receiver 1 when actuating the mechanism either manual or electrical, it makes the cleaning baize 21 inhouse in a disposable cartridge 13 to slide from the emission reel 14 to recovery reel 28, after passing by the cleaning window 6 where the hearing area of receiver 1 is placed, performing the cleaning when the baize 21 frictions in contact with the receiver 1. Thus, the cleaning is performed by friction by the cleaning baize 21 which displaces by the traction made by the traction shaft 27 connected to motor and with recovery reel 28. The cleaning base 21 has side perforations 50 to allow the sliding by gear wheels of traction roll 26. Since the cleaning baize 21 is rolled on the emission 14 and recovery 28 reels inhoused in a compact disposable cartridge 13, utilized when all cleaning baize 21 passes from emission to recovery reels, this guaranties the efficiency of the cleaning system. The cleaning baize 21 may be slided by hand or by electrical means (batteries 31) of the motor 35.

Instead of a cleaning baize 21 of a single use, the cartridge or cassette 13 may incorporate another one of continuous use which will allow the constant use of cassette with regard to shape and aspect of cassette it is similar to the one used for single purpose. The sliding on the electrical system may be performed by gears instead of pulleys.

With regard to cover of cleaning window 6 placed outside of case of telephone where the speaking area of receiver 1 is placed when at rest, the cover may open in addition to manual by the pulse of an electromagnet exited by the electrical current closing the cover by itself by the recovery of springs coupled to said window when electrical current is disactivated. motor, in such a way that it may be optional for the user to use the cleaning system or not if they drop coins in.

Amongst other advantages it has the following :
1. It allows a considerable amount of cleanings, which will depend of telephone case size, public or private, since this will determine all the other set components such as motor, cartridge etc., where the bigger the case is, the bigger amount of cleanings will be allowed. It is calculated that for model TEIDE commercialised by "TELEFONICA ESPAÑA" and used as a base of this project, it would allow for 100 cleanings approximately, an amount not too bad if we consider the small size of the case thereof. For this telephone model, the emission reel may roll 5 m of cleaning baize for single use of 0,20 m/m thickness, capable of about hundred cleanings, more cleanings will be allowed as we increase the size of main case and the components of system.
2. The fact that baize 21 is always soaked with an antiseptic even after used, since it is installed in the disposable cartridge 13 and also since the baize 21 is even more soaked when it passes from the one reel 14 to the other reel 28 through the antiseptic liquid reservoir 18 of cartridge 13.
   Therefore, the guaranty of efficiency and durability of the baize 21 cannot be bigger, since it will remain soaked while there is still liquid in the reservoir 18, which will allow for a long period of storage of stock cartridges, and
3. When the cartridge or cassette 13 is finished after been used, it can be easily replaced by another one purchased in any warehouse, drugstore or retail store.

At the sight of the foregoing, it may be deduced that the device of the present invention is efficient in the prevention of contamination of illness and disease (Hepatitis, Lung and Mouth diseases, Tuberculosis, Aids, etc.) which can be obtained by mouth, ear or face contact, with the receiver speaking and hearing areas if a good disinfection is not properly performed before another user comes into contact with it.

It is evident that best way to avoid contagious illness is by prevention. Therefore, the limitation of contact with contagion factors is increasingly important in order to maintain the health of the population.

All this makes this new device of utmost importance in the maintenance of public health, since it contributes to avoid the risk that could exist for those persons which make use of telephones, which in general is the majority of the people. Therefore it is important, due to the improvement in the quality of life which it brings.

The system of the present invention is mainly oriented to areas of public use (hospitals, hotels, restaurants, large commercial areas, etc.) to say nothing about its use in PUBLIC TELEPHONES and in lower scale, and without mentioning its importance to private telephones.

With regard to its manufacture, it does not represent any problem since all components, for private or public, are simple and low cost, most of the parts being plastic.

## Claims

1. A telephone set comprising
a base (2)
a receiver (1) having speaking and hearing portions; said base (2) having windows (6) for receiving the speaking and hearing portions,
charaterized in that said base windows (6) having sliding covers (7) to close said base (2) housing and said base (2) having a disposable cartridge case (13) comprising a cleaning cloth (21), and an antiseptic liquid (19) in a reservoir (18), so that after opening of sliding covers (7), the cleaning cloth (21) is impregnated in antiseptic liquid (19) as it unrolls from emission reel (14) and taken in by the recovery reel (28) while such cleaning cloth (21) is passing through the antiseptic liquid reservoir (18).

2. A telephone set according to claim 1, characterized in that the cleaning cloth (21) is provided with perforation means along opposite longitudinal sides for receiving reels and thus allow the movement of said cleaning cloth (21) in an independent mood from said recovery reel (28).

## Patentansprüche

1. Telefonapparat, der eine Basis (2) und einen Hörer (1) mit Teilen zum sprechen und zum hören umfasst und bei dem besagte Basis (2) Fenster (6) zur Aufnahme der Teile zum sprechen und zum hören aufweist, dadurch gekennzeichnet, daß besagte Fenster (6) der Basis verschiebbare Deckel (7) besitzen, um die besagte Hülle der Basis (2) zu schließen, wobei besagte Basis (2) eine Wegwerfkartusche (13) besitzt, die ein Reinigungstuch (21) und eine antiseptische Flüssigkeit (19) in einem Behälter (18) beinhaltet, so daß sich das Reinigungstuch (21) nach der Öffnung der verschiebbaren Deckel (7) mit der antiseptischen Flüssigkeit (19) vollsaugt, indem besagtes Reinigungstuch (21), von der Ausgaberolle (14) abgewickelt und von der Aufnahmerolle (28) wieder aufgenommen, durch das Behälter (18) der antiseptischen Flüssigkeit geführt wird.

2. Telefonapparat nach Anspruch 1 dadurch gekennzeichnet, daß das Reinigungstuch (21) mit einem Mittel zur Perforation entlang der der Aufnahmerollen entgegengesetzten Längsseiten geliefert wird, was daher die von der besagten Aufnahmerolle (28) unabhängige Bewegung des besagten Reinigungstuches (21) erlaubt.

## Revendications

1. Un appareil de téléphone qui comprend
une base (2)
un récepteur (1) qui possède des parties pour parler et pour écouter ; ladite base (2) ayant des fenêtres (6) pour placer les parties pour parler et pour écouter,
caractérisé par le fait que lesdites fenêtres (6) de la base ont des couvercles coulissants (7) pour fermer ladite enveloppe de la base (2) et cette base (2) ayant une caisse de cartouche jetable (13) qui comprend un chiffon de nettoyage (21) et un liquide antiseptique (19) dans un dépôt (18), de telle sorte qu'après l'ouverture des couvercles coulissants (7), le chiffon de nettoyage (21) s'imprègne de liquide antiseptique (19) au fur et à mesure que se déroule le rouleau d'émission (14) et qu'il est recueilli par le rouleau de récupération (28) tandis que ledit chiffon de nettoyage (21) passe par le dépôt (18) du liquide antiseptique.

2. Un appareil de téléphone selon la revendication 1, caractérisé par le fait que le chiffon de nettoyage (21) est fourni avec un moyen de perforation le long des côtés longitudinaux contraires pour les rouleaux récepteurs et permettant, par conséquent, le mouvement dudit chiffon de nettoyage (21) d'une façon indépendante dudit rouleau de récupération (28).
